(19) Europäisches Patentamt

European Patent Office

Office européen des brevets

(11) **EP 1 587 257 B1**

## (12) EUROPEAN PATENT SPECIFICATION

(45) Date of publication and mention
of the grant of the patent:
**21.03.2007 Bulletin 2007/12**

(51) Int Cl.:
***H04L 12/56*** *(2006.01)*

(21) Application number: **04291025.7**

(22) Date of filing: **16.04.2004**

(54) **Method and arrangement for selecting one of several nominally identical data streams**

Verfahren und Vorrichtung zur Auswahl einer von mehreren, nominell identischen Datenströmen

Procédé et dispositif pour sélectionner un des plusieurs flux de données nominalement identiques

(84) Designated Contracting States:
**DE FR GB**

(43) Date of publication of application:
**19.10.2005 Bulletin 2005/42**

(73) Proprietor: **Nortel Networks Limited
St Laurent, Québec H4S 2A9 (CA)**

(72) Inventor: **Sirdey, Renaud
78720 Cernay-la-Ville (FR)**

(74) Representative: **Bird, William Edward et al
Bird Goen & Co.,
Klein Dalenstraat 42A
3020 Winksele (BE)**

(56) References cited:
**WO-A-02/062022          US-B1- 6 263 204**

## Description

Field of the Invention

The present invention relates to the field of information technology especially to telecommunications and computing. In particular the present invention relates to devices and methods for selecting one of two or more constant rate data streams as well as the application of such devices or methods in telecommunications networks and apparatus, for example wireless telecommunications networks or apparatus. Hence, this invention relates to a method, software and apparatus for selecting one of several duplicated data streams especially streams of wireless data traffic within a telecommunications network especially a wireless telecommunications network.

Technical Background

Several methods are known for improving the reliability in telecommunications systems, for instance "loop or echo checking" in which the received data word is sent back to the transmitter and the original data word is compared with the word transmitted over the forward and reverse transmission lines. Forward error correction makes use of more complex check codes in which the number of check bits can be as long as the data word transmitted and there are diminishing returns in having such long error checking and correction additions to a data word. Other method duplicate data or use multiple paths as described, for example, in US-4 953 197. In this known technique, two signals are received from two antennae in parallel, quality data and parity information are checked for each data word received from the two antennae and the best selected. US-5 268 909, US-5 406 563 and US-5 406 563 all describe methods of routing signals synchronously and in parallel using parity bits in each word transmitted and checking not only the parity for each received data word but also comparing the contents of the same word received via the two routes through the network. In particular, with these known systems, the parallely received data words are compared bit-for-bit in a single comparator after a parity check has been performed. Such schemes have been devised for transmission of user messages in which it is necessary to transmit some data even if it is not perfect rather than transmit gaps in the messages. Further, these methods have been devised for real time synchronous transmission.

In WO 02/062022 data packets are duplicated and sent over separate paths of a network. At a network node packets sent over the different paths are received and compared.

Yet a further well known method is to receive duplicated signals from different sources or by multipath transmission and then to combine the received signals in a suitable combiner such as a maximum likelihood combiner to obtain the best received signal. Such a system requires a powerful microprocessor as the algorithm to be used is complex.

In battery operated equipment such as mobile phones it is preferred to reduce the computational complexity in order to increase battery life. Even in ground stations such as wireless base stations there is still a desire to reduce complexity while maintaining redundancy in order to improve reliability. Hence, there is a need for simpler methods and devices with improved reliability.

Summary of the present invention

It is an object of the present invention to provide network equipment and telecommunications systems and operating methods which are reliable.

It is an advantage of the present invention that network equipment and telecommunications systems as well as operating methods of these can be provided which allow efficient selection of duplicated data paths.

The present invention provides a method of selecting one of a plurality of nominally identical data streams carried on separate data paths, the method comprising:

monitoring a characteristic of the data streams which varies randomly or pseudorandomly with time;
selecting one of the data streams based on an estimated probability of an error in a decision to select one of the data streams in accordance with a hypothesis testing algorithm. The data streams may be at constant bit rate. The characteristic of the data streams which varies randomly or pseudorandomly with time can be the number of data cells carried by a data path in a unit time. This is convenient for a transmission protocol such as ATM. For example, the data streams may be generated by packing data from a wireless network into an adaption layer of a network transmission protocol and the data may be supplied from a wireless network, for example by an SS7 or LAPD data stream.

The monitoring of a characteristic of the data streams which varies randomly or pseudorandomly with time can include calculating a variance value of the characteristic and/or an average value of the characteristic. As an example, if the ratio of the average value to the variance values lies below a statistical value, the decision to select may be to make no change in the data path currently used.

The present invention provides a network element having means for selecting one of a plurality of nominally identical data streams carried on separate data paths, the network element comprising:

means for monitoring a characteristic of the data streams which varies randomly or pseudorandomly with time; means for selecting one of the data streams based on an estimated probability of an error in a decision to select one of the data streams in accordance with a hypothesis testing algorithm. With such a network element the characteristic of the data streams which varies randomly or pseudorandomly with time can be the number of data cells carried by a data path in a unit time. The network element may include packing means for packing data from a wireless network into an adaption layer of a network transmission protocol to generate the data streams. The means for monitoring preferably has means for calculating a variance value of the characteristic and/or for calculating an average value of the characteristic. As an example, the means for selecting may not select a new data stream if the ratio of the average value to the variance value lies below a statistical value.

The present invention also provides a software product comprising code for executing any of the methods of the invention when the software product is executed on a processing engine. The present invention also includes a machine readable data carrier storing the software product, e.g. on an optically readable disc such as a CD-ROM or DVD-ROM.

The present invention will now be described with reference to the following drawings.

Brief description of the drawings

Fig. 1 is a schematic diagram of part of a telecommunications network in accordance with an embodiment of the present invention.
Fig. 2 is a schematic representation of a supervising module and selector in accordance with an embodiment of the present invention.
Fig. 3 is a flow diagram of a hypothesis algorithm applied in accordance with an embodiment of the present invention.
Fig. 4 is a flow diagram of a decision process in accordance with an embodiment of the present invention.

Description of the illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The present invention relates to telecommunications networks in general. In the following reference will be made to wireless networks as one example of how the invention may be implemented but the present invention is not limited thereto. The present invention may be used on any data network, e.g. wireline, fibre optic cable, coax, twisted pair, wireless - either radio or optical, e.g. infra-red, etc.

Wireless cellular networks are capable of carrying data traffic. The present invention may be applied to any suitable wireless cellular network. The present invention relates to wireless telecommunications networks especially mobile cellular telephone systems e.g. wideband or narrow band, such as a WideBand CDMA, UMTS, GSM and GPRS, IS 95 or IS-136 public mobile telephone network, a private radio Local Area Network, such as a HIPERLAN /1 or /2 network in a hotel lounge, a private personal radio network such as a BlueToooth local access network which may be connected to a Local Area Network e.g. in supermarket, a railway station or an airport. Information on GSM systems can be found in the book "The GSM System of Mobile Communications", by Mouly and Pautet, Cell & Sys, 1992. Information on the IS-936 system can be found in the book "IS-136 TDMA Technology, Economics and Services", by Harte, Smith, Jacobs, Artech House, 1998. Information on the IS-95 system can be found in the books "CDMA Systems Engineering Handbook", Lee and Miller, Artech House, 1998 and "CDMA for Wireless Personal Communications", Prasad, Artech House, 1996. Information on wideband CDMA such as UMTS systems may be found in the books "WCDMA for UMTS", by Holma and Toskala, Wiley, 2001 and "Wideband CDMA for third generation mobile communications", Ojanperä and Prasad, Artech House, 1998. Particularly spread spectrum systems, especially direct sequence spread spectrum systems, whether wide band or narrow band, such as CDMA networks, for example UMTS or IS-95 or CDMA2000, can be operated in accordance with the present invention. The design and construction of Wireless LAN's is discussed in detail in, for example, "Wireless LAN's" by Jim Geier, Macmillan Technical Publishing, 1999. OFDM systems are described in "OFDM for wireless multimedia communications", R. Van Nee and R. Prasad, Artech House, 2000. Any of the networks may be cellular networks.

The terms terminal or user terminal or mobile unit should be interpreted in a broad sense and may include any suitable user equipment whether stationary or mobile such as, mobile telephones, smart phones, PDA's or laptops with mobile termination, or for example, portable, pocket, hand-held, computer-included, or car-mounted mobile devices which communicate via voice and/or data/multimedia. The term "user" will be taken to include the terminal used by the user.

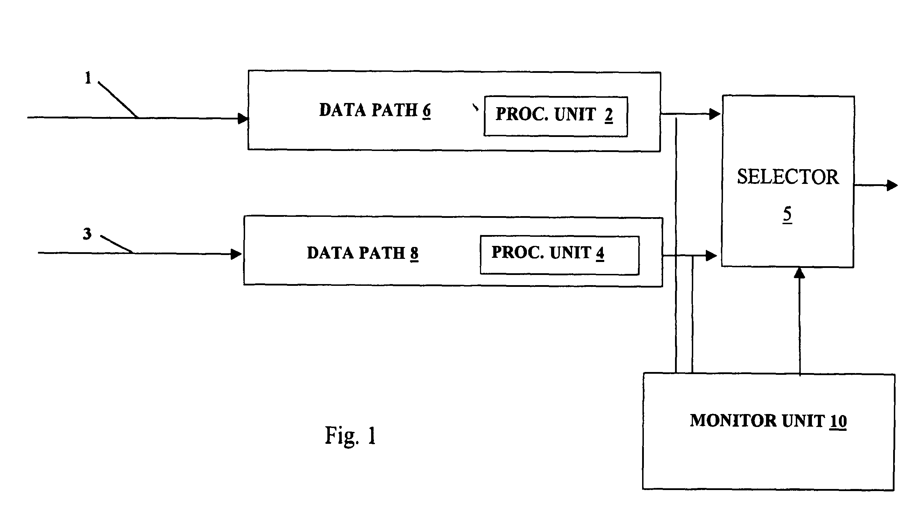

As shown in Fig. 1 schematically a constant rate data signal is received in two or more copies 1, 3, ..... or is duplicated, triplicated, etc. to provide multiple, nominally identical data streams 1, 3, ..... The term "nominally identical" refers to the fact that measuring characteristics of the two streams should give identical results except for random variations or when errors have occurred. Duplication or more generally n-plication from a single source provides nominally identical streams. The data streams pass in parallel through two or more data paths 6, 8,... which may include processing units 2, 4, ...., whereby this processing may include in an ATM system, for example, handling (amongst other things) the physical layer dependant (PMD) sub-layer (whose purpose is to insert/extract bits from the transmission medium) as well as the transmission convergence (TC) sub-layer (which is responsible for the low-level functions associated to cell transmission such as header error control - HEC - verification). One of the two or more data streams is selected by a selector 5 and then processed further. Such an arrangement may be used in a telecommunication switching system where call management signaling is carried over constant bit rate channels (for example, LAPD and SS7 in a GSM system) themselves carried over AAL1 ATM cell streams and n-plicated for reliability reasons.

In addition a supervision module 10 investigates each of the data streams 1, 3 and instructs the selector 5 to switch between one data stream or the other depending upon criteria which well be described in more detail below. Decision means are provided for deciding whether to change stream or not and the criteria will determine whether there is a probability of a fault having occurred in one of the data streams which will be used for the basis of the decision. The switching process is preferably and usually automatic. Preferably, a switching event should be completed within a short period of time, e.g. less than a second, after a defect has occurred, is detectable or has been detected in one of the data streams indicative of a total or partial failure of the presently active data path. This switching time should preferably be short enough to prevent a loss of a call, e.g. in a voice call or the loss of the connection towards an external equipment (such as a Base Transceiver Station (BTS) in a GSM system), when such a loss can result in a requirement to restart the external equipment which in general implies an outage of several minutes. For example, this could result in the loss of all call processing abilities in a small geographical area in a GSM system.

Additionally, it is preferred if the supervision module records, i.e. has means for recording information or transmits, i.e. has means for transmitting information regarding the rate at which switching between the data paths occurs. This information may be useful in compiling device reliability and in determining the need for maintenance or replacement. The method of detecting faults on a data path in according to the present invention is simple and fast and can be carried out with a reasonable computational complexity. In particular, the present invention addresses a problem that the more accurate one wishes to determine that an error has occurred the longer this takes and the greater the likelihood of a loss of a call.

This problem will now be illustrated by means of examples using different sampling times, e.g. 1 second or less. The data streams 1, 3 have a constant rate, i.e. they are streams of digital data with a constant bit rate. Nevertheless all data streams exhibit non-negligible random or pseudorandom fluctuations. In accordance with an aspect of the present invention a plurality of nominally identical data streams are monitored for a property of the data stream which varies in a random or pseudorandom manner. In the following example, an application of an ATM adaption layer (AAL) will be described which supports a data stream having a constant bit rate. It is assumed that incoming data streams will be mapped onto an ATM data flow. ATM networks are described, for example, in "ATM theory and Applications", by D. McDyson and D. Spohn, McGraw-Hill, 1999, and AAL particularly in chapter 13. In particular reference will be made to an AAL 1 data stream which has the following characteristics: PDU size in the range 46-47 octets and a constant bit rate, e.g. for carrying real time traffic such as voice, video or circuit emulation. The clocks in each data path will be assumed to be 8k per second and constant and equal for each data path. For instance, an example will be described of mapping a 64 kbits per second channel onto an AAL 1 stream resulting an average of 170.2128 AAL 1 cells per second being packed on average. Since AAL 1 cells are not splittable, a measurement of the throughput in any second of time will result in either 170 or 171 cells. On average of 170 cells will be packed approximately 4 times out of 5.

Whether 171 or 170 cells per second are measured will vary in a random or pseudorandom manner. The average incoming AAL 1 rate may be described as M.F where M is an integer and .F is a decimal part. The decimal part .F of the incoming AAL 1 rate for one channel may be interpreted as a probability as the integer number of cells, either M or M+1, will vary randomly with time. For example, in a base station controller (for example a BSC in a GSM system) the signaling between the BTS and the BSC and between the mobile switching center (MSC) and the BSC are carried over 64 kbits per second channels dedicated to the LAPD and SS7 protocols, respectively. Each such channel is then mapped onto the communications ports of a transaction management unit (TMU), a card responsible for call processing. In such a case, each data port such as a LAPD or SS7 port on the TMU is mapped onto a 64 kbits per second channel and the incoming AAL 1 stream represents the superimposition of all these channels. Because these channels are not synchronized with each other, each of them has a probability of generating an additional cell equal to 0.2128 if there is a 1 sec sampling time and the probabilities of occurrence will combine in accordance with statistical rules. So ifN denotes the number of channels, the incoming AAL 1 stream (that is the random variable which counts the number of incoming AAL 1 cells in 1 second) can be modeled as follows:

$$x_{(1 \, sec)} = 170k + B(N, 0.2128) \qquad \text{Eq. 1}$$

where B(N, p) denotes the results of a binomial experiment of parameters N and p. Hence if, for example, 62 LAPD ports are active the incoming AAL 1 stream has a mean of 10553.1936 and variance 10.3860. The variance appears negligible in this case. However, if a switching time of 1 second or less is to be achieved the sampling time will have to be reduced much below 1 second if detection of a failure in a data path is to be accomplished in a short enough time. If the sampling time of the incoming AAL 1 stream is reduced to 40 milliseconds then 6.8085 AAL 1 cells are measured per LAPD port on average and the average number of incoming AAL1 cells becomes 422.1277 with a variance equal to 9.5993. Hence the average fluctuation is of the order of one half of a LAPD channel. Moreover, the variance of the incoming AAL 1 stream depends on the number of underlying LAPD channels which makes it difficult to define a "universal" threshold.

In the above the arrival time or throughput of cells has been measured as the property of the data stream which varies in a random or pseudorandom manner. Within the scope of the present invention, other properties can be measured in this same application as well as in other applications to which the invention can be applied. An example of another application is: two identical data streams can be sent by two different paths over a wireless air interface and the amplitudes of the received signal are used as a randomly varying parameter for selection of one of the two data paths. Due to the path difference and interference and fading effects, the received amplitudes will vary randomly or close to randomly. The present invention may be used to select one data stream while avoiding the need for a combiner. Generally, instead of combining two streams one can look only at one of the two streams and choose the best according to a criteria, whereby on the air interface it could be the power of the signal or any other low-level measurement (or any combination of such parameters) which is preferably related to the quality of the data carried over the stream. If the data stream is digital one could measure the times between rising flanks or between rising and falling flanks of a binary signal. For example, an application could be more sensitive to variation in the bit rate than the bit rate itself. If such an application runs over a packet network it would be possible to observe the packet interarrival time on two separate routes and to base the decision on comparing the variances of the two interarrival times.

The present invention may be applied to several different situations and applications, each of which is an embodiment of the present invention. For example, one data stream arrives, is duplicated and is then packed into ATM cells in an AAL 1 flow. As each stream is packed separately, the packer would make random differences in the number of cells per second and these random variations can be monitored in accordance with the present invention. In this case, each data stream would be independent of each other. Alternatively, one date stream arrives and is packed into ATM cells in an AAL 1 flow. The ATM flow is duplicated and each stream is sent over separate data paths. Now the packing is done once and the data stream should be nominally exactly the same although there will still be random variations. These can be monitored to detect if there is an error in the data path. As a third alternative, two nominally identical streams arrive over two different paths and are therefore different and each is packed separately. Again there will be random variations which can be monitored in accordance with the present invention.

The present invention is robust enough to cope with almost any type of random fluctuation which is not "unreasonably strong". The variance of the random fluctuation (which can be considered as being its strength) is related to the resolution of the method, that is the "smallest" event that the method is able to detect. For example, in the above example, the AAL 1 traffic is the superimposition of many CBR channels and, as a consequence, the "smallest" event to be detected is "one channel is broken". If the strength of the random fluctuation is too large it is possible that one broken channel cannot be detected reliably and reliable decisions may only be possible when, for example, 2 or 3 channels are broken. However, even in such a case the method of the invention will provide a workable solution provided a 2 or 3 channel break is accepted as a reasonable measure of reliability.

The above examples demonstrate a general problem - the shorter the sampling time the greater the chance of an error in deciding which of data paths is the best. In order to improve accuracy the data stream in each data path could be decoded and the individual bits, bytes or frames analyzed and compared between the received data streams from other data paths. For example, one could determine bit, symbol, byte or frame error rates for each data stream and then select the best one. Alternatively, the streams could be combined in a suitable combiner, e.g. maximum likelihood combiner. However, these methods would require a considerable amount of processing power. It could also take rather a long time to detect that an error had occurred and that another data path should be selected.

The present invention proposes to use a simpler method of determining whether a data path is defective. In accordance with one aspect of the present invention the decision between which of the data paths should be selected is determined based on probability theory. In particular, the decision as to which of the data paths should be selected is preferably based on a hypothesis testing algorithm. For example, the selection can be based on determining a probability of an error in the decision to switch to a data path (or to stay with the existing path), examining this error and deciding whether a switch to another data path should be made based thereon. The probability of an error in the decision is determined based on a property of the data stream which is expected to vary randomly or pseudorandomly. As the property, e.g. number of ATM cells packed in unit time, varies randomly, any deviation from the average value can be analyzed using statistical theory to determine the chances of such a deviation occurring because of a fault or merely because of random variations. In the following reference will be made to deciding between two data paths however the present invention may be applied to any number of identical constant rate data paths.

The present invention provides a statistical model of a constant rate data stream. In the following this will be described with reference to an AAL 1 data stream in an ATM network as an example only. The present invention is not limited to AAL 1 streams or to ATM networks.

In accordance with an aspect of the present invention an incoming data stream such as the AAL 1 data stream on one plane (data path) is modeled as the superimposition of N substreams each of which generating cells at rate $\tau$ per unit of time. Let $\Delta_t$ denote the sampling rate then the number of AAL 1 cells received on one plane (data path) during $\Delta t$ is

$$X(\Delta_t) = N\lfloor \tau\Delta_t \rfloor + B(N, \tau\Delta_t - \lfloor \tau\Delta_t \rfloor) \qquad \text{Eq. 2}$$

where B(N, p) denotes the result of a binomial experiment of parameters N (the number of trials) and p (the probability of success in one trial).

Hence,

$$E[X(\Delta_t)] = N\tau\Delta_t \text{ and } Var[X(\Delta_t)] = N(\tau\Delta_t - \lfloor \tau\Delta_t \rfloor)(\lceil \tau\Delta_t \rceil - \tau\Delta_t),$$

the worst case variance being achieved if the decimal part of $\tau\Delta_t$ is equal to 1/2. It is well-known from, for example, Gilbert Saporta, "Probabilités, analyse des données et statistiques", Edition TECHNIP, 1990, that as soon as $N_p$ is sufficiently large the binomial distribution can be approximated by a normal distribution. Hence equation (2) may be rewritten as:

$$X(\Delta_t) \approx (N\tau\Delta_t, Np(1-p))$$

where $p = \tau\Delta_t - \lfloor \tau\Delta_t \rfloor$. This motivates the use of the following model for the incoming AAL 1 streams on the two planes: let $N_A$ and $N_B$ respectively be the number of active channels on plane A and B then

$$\begin{pmatrix} X_A(\Delta_t) \\ X_B(\Delta_t) \end{pmatrix}$$

follows G($\mu$, $\Sigma$) where

$$\mu = \begin{pmatrix} N_A \tau \Delta_t \\ N_B \tau \Delta_t \end{pmatrix}$$

and

$$\Sigma = \begin{pmatrix} \sigma_A^2 & \rho \sigma_A \sigma_B \\ \rho \sigma_A \sigma_B & \sigma_B^2 \end{pmatrix}$$

where $\sigma_A^2 = N_A p(1-p), \sigma_B^2 = N_B p(1-p)$ and where ρ is the linear correlation coefficient which is expected to be inversely proportional to |NA - NB| (i.e. close to 1 if|NA = NB|. Since the difference of two Gaussian random variables (whether or not they are correlated) is a Gaussian random variable, it follows that:

$$X_A(\Delta_t) - X_B(\Delta_t)$$

follows ($\lambda_A$ - $\lambda_B$, σ)

where $\lambda_A = N_A \tau \Delta_t$, $\lambda_B = N_B \tau \Delta_t$ and $\sigma^2 = \sigma_A^2 - 2\rho \sigma_A \sigma_B + \sigma_B^2$ .. For simplicity's sake the fact that σ depends on NA, NB and |NA - NB| is not exploited.

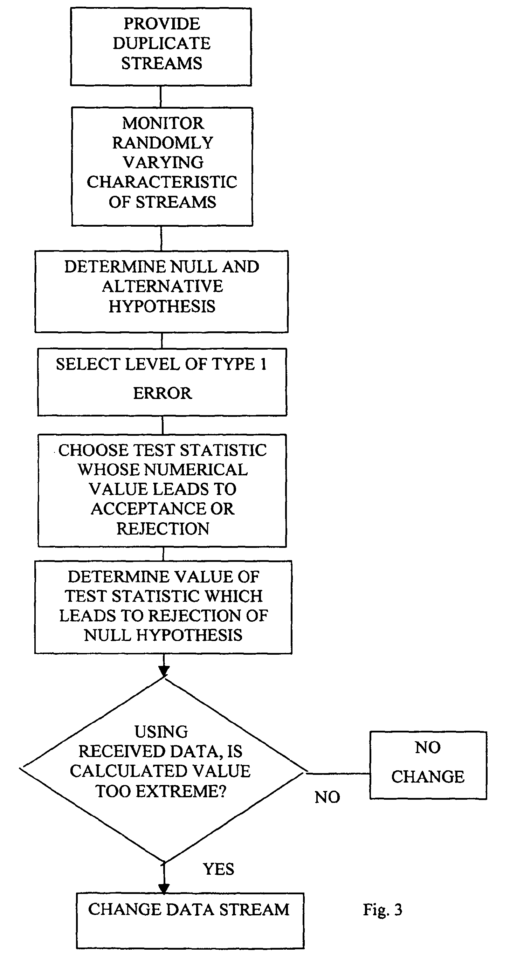

In embodiments of the present invention the decision as to whether a data path is to be selected will be based on statistical hypothesis testing theory. Testing hypotheses is a fundamental part of statistical inference. Hypothesis testing refers to the body of statistical techniques that can be used to arrive at a yes or no decision regarding a particular hypothesis. The present invention makes use of hypothesis testing to select one of several nominally identical data streams. Using hypothesis testing to select between two data paths involves the following steps. The test involves testing a null hypothesis against an alternative hypothesis. In the first step (see Fig. 3) the null hypothesis is determined, for instance in the example given, the conditions under which no change is made in the data path are determined while the alternative hypothesis is determined as the conditions which result in a change in the data path. The test is applied to a variable which varies randomly. In the example given in the present invention the difference $\lambda_A$ - $\lambda_B$, that is the difference between the throughput on data path A and data path B, is to be used for the hypotheses. Each hypothesis can be simple or composite. In particular, for the example given each hypothesis can be composite and one sided. The second step is to choose the numerical value for the Type 1 error usually designated by α and is often called the significance level of the test. A type 1 error is when the null hypothesis is rejected although it is true. The higher the significance level, the greater the risk of rejecting the null hypothesis when it is true. A type II error is accepting the null hypothesis when it is false. The type II error is often represented by β and the power of the test is β. Selecting the value of α depends on the application and the fact that there is a trade-off between the two types of error. The probability of making one type of error can only be reduced by increasing the probability of the other type of error. In the case of nominally identical streams, the penalty of making the one type of error is about the same as for the other type of error, so that one solution is to make both probabilities of the two types of error the same. However, as rejecting the null hypothesis involves some activity and can cause a delay and maybe even a loss of a call if something goes wrong, there is a natural inclination to make the probability of erroneously rejecting the null hypothesis rather low. If nominally identical streams which are working perfectly are monitored with a hypothesis algorithm in accordance with the present invention there will be random switching at a rate determined by the frequency at which unlikely randomly generated situations occur. To suppress this natural but unwanted oscillation, the value of alpha should be set as low as possible while still providing a switch to the alternative data stream in a reasonable time in case of a malfunction of the first stream.

The third step is determining the test statistic which is the quantity calculated from the data whose numerical value leads to acceptance or rejection. The quantity calculated is the ratio between the mean and the empirical standard deviation on a small sample D1, ..., Dn. The critical region of a test is the set of observed values of the test statistic that lead to rejection of the null hypothesis, i.e. a region where the test characteristic has a value which is more unlikely than would be predicted from the selected value of the type I error. Hence this region is often called the $\alpha$-level critical region The decision criteria may be expressed as:

a) Reject the null hypothesis in favor of the alternative hypothesis if a characteristic of the test statistic, e.g. its average value, lies in the critical region defined by the type one error.

b) Do not reject the null hypothesis in favor of the alternative hypothesis if a characteristic of the test statistic, e.g. its average value, lies outside the critical region defined by the type one error.

For the example given, a value Z can be defined as $\sqrt{n}\,(\overline{X} - \mu_0)/\sigma$ and $Z_{1-\alpha}$ $\sqrt{n}\,(\overline{X_{1-\alpha}} - \mu_0)/\sigma$ where $\sigma$ (sigma) is the variance and $\mu_0$ is the probability on the right hand side of the null hypothesis (zero in the example).

Then the null hypothesis is rejected if the observed value of the average $\overline{X}$ is less than $\mu_0 - Z_{1-\alpha}\,\sigma/\sqrt{n}$.

The fourth step can be carried it in two equivalent but alternative methods: 4A and 4B. In step 4A those observed values Y of the test statistic are determined that lead to rejection of the null hypothesis. For example if the value of the test statistic is sufficiently extreme, e.g. sufficiently large or sufficiently small, the null hypothesis is rejected. Hence, if the observed value is lower than some significance point $K$ the null hypothesis is rejected. If the null hypothesis is a governed by a probability $p$ ( in the case of the null hypothesis in the example the value ofp is zero) then the probability that the null hypothesis is rejected when it is true is given by:

$$\text{Prob}(Y \text{ less than or equal to } K | p = 0) = \alpha.$$

If there are many test results in the sampling time the binomial may be replaced by a normal distribution and the above equation may be approximated by:

$$\text{Prob}(Y \text{ less than or equal to } K - 0.5) = \alpha.$$

In the above example the null hypothesis is rejected if the value of Y is sufficiently low. If the alternative hypothesis had specified that a value such as $\lambda_A - \lambda_B$ should be greater than a certain value, then the null hypothesis would be rejected for sufficiently small Y.

The fifth step is to obtain the data and to determine whether the observed value of the test statistic is equal to or more extreme than the significance point $K$ and to reject the null hypothesis if it is. The consequence would be a change in data path.

The alternative fourth step, 4B involves the calculation of the $P$ value or achieved significance level. Instead of calculating $K$, once the data has been obtained the null hypothesis probability of obtaining the observed value of the test statistic is calculated or one or more extremes in the direction indicated by the alternative hypothesis. This probability is called the $P$ value. The $P$ value of a statistical test is the probability of observing a sample outcome as extreme as or more extreme than the one observed. This probability is calculated under the assumption that the null hypothesis is true. If the P value is less than the chosen type 1 error the null hypothesis is rejected.

In the calculation of the probabilities in the above steps the observed variance s as calculated from the observed values may be used rather than the actual variance $\sigma$ taken over a large number of samples. Alternatively, a variance may be calculated as a running variance over a larger number of samples than collected during the sample time used for making the decision on the null hypothesis based on the assumption that the variance does not change very much with time so that a running average over a longer time gives a more accurate result. Similarly the value of Z may be replaced by $t$ defined by:

$$t = \sqrt{n}\,\frac{(\overline{X} - \mu_0)}{s}$$

For the example given the algorithm then calculates t and the null hypothesis is rejected if t is less than $t_{1-\alpha,\, n-1}$.

Further details of these methods can be found in "Statistical methods for the analysis of Biomedical data" R. F. Woolson and W. R. Clarke, second edition, Wiley, 2002, especially chapter 5 and "Statistical methods in Bioinformatics", Springer, 2001.

The present invention includes within its scope that any suitable property of a randomly varying signal can be used. Typically, the mean of a value for two or more data streams will be compared, or the proportions of discrete alternatives, e.g. comparing the ratios of the number of 168, 169, 170, 171 cells received per second for the two or more data streams in the ATM example above.

The present invention also includes within its scope the use of more complex methods of hypothesis testing than described above. For example, more than one characteristic of the samples can be used. For example, a plurality of values $X_1$, $X_2$ ... of different characteristics of the observed samples may be used and the mean value of each of these may have a certain value (these can be different) and values of any one or more of them may be used to determine the rejection of the null hypothesis. Further, the form of the distribution of the random variable or variables does not need to be normal. In this case, so-called non-parametric methods may be applied. Parametric methods can also be applied in the non-normal distribution case. Parametric just means that an assumption is made regarding the probability law of the underlying phenomena. Examples of non-parametric methods, are the Mann-Whitney and the permutation test. Reference is made to the above literature for details of these methods. These kinds of tests can be used to perform analysis of variance on small samples and when the underlying probability law is unknown. They can be relevant: for example the variance may be a measure of "activity" and a path is selected based on which path has the most "activity".

Use of the hypothesis test in the present invention is motivated by the data stream model presented above. Without loss of generality it is assumed that $plane_A$ is the active data path, i.e. the one that is selected for further processing and $plane_B$ is the data path which is not selected. Hereafter $X_A(\Delta_t)$ and $X_B(\Delta_t)$ respectively denote the number of AAL 1 cells received on $plane_A$ and $plane_B$ during the time interval $\Delta_t$ and $\lambda_A$ and $\lambda_B$ respectively denote the mathematical expectations of $X_A(\Delta_t)$ and $X_B(\Delta_t)$. An aspect of the present invention is to solve the following composite versus composite hypothesis test:

$$H_0 : \lambda_A - \lambda_B \geq 0$$

(in this case there would be more AAL 1 traffic on $plane_A$)

$$H1 : \lambda A - \lambda B < 0$$

(in this case there would be more AAL 1 traffic on $plane_B$)

It is assumed that if there is more traffic on one of the planes this is indicative of a failure in the data path of the other plane as both data streams are nominally identical. Due to random variations some differences might be expected, so the problem is to decide when a difference is sufficiently significant that a data path switch should be made or when it is not statistically significant and the data path should not be changed (null hypothesis).

If $H_1$ is chosen then a data path switch is triggered. The choice for the null hypothesis (Ho) is motivated by the fact that a conservative decision rule is preferred. In general, a hypothesis test always has a small bias in favor of the null hypothesis. That is a change is only made when there is some significant evidence of the need for a change. Given n successive values $\{D_1; D_2 ..... Dn\}$ of $X_A(\Delta_t) - X_B(\Delta_t)$, the above test is solved as follows:

1. If

$$\overline{D} = \frac{1}{n}\sum_i D_i \geq 0$$

then decide $H_0$.

2. Otherwise solve the simple versus composite test

$$H'_0 : \lambda_A - \lambda_B = 0$$

$$H'_1 : \lambda_A - \lambda_B < 0$$

Regarding this further test, H'$_o$ is conserved if $\dfrac{\overline{D}}{S_D} \geq -\dfrac{\gamma}{\sqrt{n-1}}$ where $S_D$ is the empirical standard deviation of D

($\Delta_t$) with $\gamma$ is such that

$$P\left(\left|T_{n-1}\right| > \gamma\right) = 2\alpha$$

where $T_{n-1}$ denotes the Student variable with n-1 degrees of freedom and $\alpha$ is the type I error. Hence, $\gamma = u_{n-1, 2\alpha}$ if the table in Gilbert Saporta, "Probabilités, analyse des donées et statistiques", éditions TECHNIP, 1990, p. 457 is used (see also table 1).

Table 1: Example values of $\gamma = U_{n-1, 2\alpha}$ in terms of $\alpha$ and $n$ (see text).

| N | 8 | 16 | 32 | 64 |
|---|---|---|---|---|
| A = 0:05 | 1:895 | 1:753 | 1:697 | 1:671 |
| A = 0:01 | 2:998 | 2:602 | 2:457 | 2:390 |
| A = 0:005 | 3:449 | 2:947 | 2:750 | 2:660 |
| A = 0:0005 | 5:408 | 4:073 | 3:646 | 3:460 |

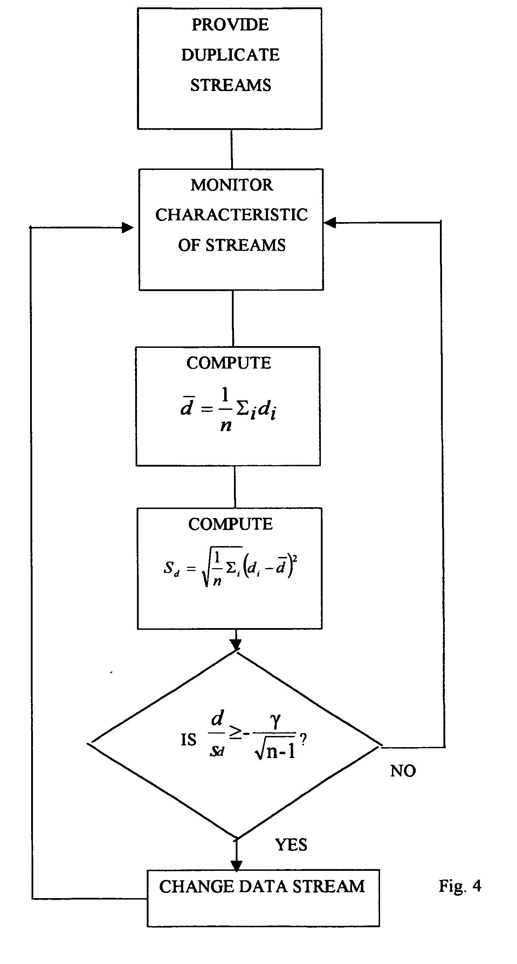

With reference to a decision rule a decision algorithm will be described with reference to Fig. 4. It is without loss of generality assumed that plane$_A$ is the active data path. At time t = t$_0$ + k.$\Delta_t$ let

$$\left\{x^A_{k-n+1}, \ldots, x^A_{k-2}, x^A_{k-1}, x^A_k\right\}$$

and

$$\left\{x^B_{k-n+1}, \ldots, x^B_{k-1}, x^B_k\right\}$$

denote the last $n$ incoming AAL 1 cell counter values on plane$_A$ and plane$_B$ respectively. Compute:

$$\left\{d_{k-n+1}, \ldots, d_{k-2}, d_{k-1}, d_k\right\}$$

where $d_i = x_i^A - x_i^B$. Compute $\bar{d} = \frac{1}{n}\Sigma_i d_i$ and $S_d = \sqrt{S_d^2} = \sqrt{\frac{1}{n}\Sigma_i (d_i - \bar{d})^2}$. The follow-

ing decision rule is then used: if $\dfrac{\bar{d}}{S_d} \geq -\dfrac{\gamma}{\sqrt{n-1}}$ then plane$_B$ becomes the active data path otherwise plane$_A$ remains the active data path. Whichever decision is made the algorithm returns to monitoring the next set of data.

The algorithm is extremely fast and requires only one circular buffer (preferably of size $2^m$). The specifications of the LAPD and SS7 protocols specify that the detection time should be bounded by 100 ms for a SS7 channel and 1 sec for a LAPD channel. The SS7 requirement is more difficult to attain so a first objective is to ensure a 1 sec diagnostic. This leads to the following choices $\Delta_t$ = 40 ms or $\Delta_t$ = 60 ms with $n$ = 16 (the window size), 16 being a "reasonable enough" size such that the estimates of both the expectation and the variance start becoming reliable. The above values for $\Delta_t$ also ensure that the traffic intensity is strong enough. Regarding $\Delta_t$ it is in one aspect of the present invention preferred to use 60 ms (rather than 40 ms) for the following reasons:

1. The worst-case diagnostic time (the maximum time it takes "for the window to forget a singularity") is still less than a sec (0.96 sec).

2. Since the sampling period is bigger the overall traffic is stronger (which is better regarding the validity of Gaussian approximations).

3. Provided that decisions are less often made, the average time between two type I errors increases.

4. Since the calculation are made less often, the CPU load is reduced.

Regarding the choice of $\alpha$ (alpha) which is the probability of deciding to switch data paths when there is in fact no reason to do so, this can be chosen as 0.0000001. To select a value of $\alpha$ one can work backwards from a failure rate: first specify the mean time between two type I errors, say m, (for example below 6.9444~1 week) and choose 1/m for $\alpha$ alpha. For the above value of $\alpha$, since the average number of trials required to observe an event of probability p is 1/p then, on average, the algorithm decides to switch data path erroneously every 1/0.0000001 x 0.060/3600 x 24 which is about 6.9444 days. This implies $\gamma$ = 8.987 (see table 2) and the use of the constant value 13 in the algorithm presented below. From table 2 below, for $\alpha$ = 0.0000001, the ratio is 13.4939. Rounding to the nearest integer gives 13 which is used below in the pseudocode.

If $\bar{d} < 0$ it is decided to switch plane if any of the following are true. The form which is used depends on which is the easiest to implement in the processing engine used, e.g. the last equation in this series.

$$\frac{\bar{d}}{S_d} < -\frac{\gamma}{\sqrt{n-1}}$$

$$\frac{-\bar{d}}{S_d} > \frac{\gamma}{\sqrt{n-1}}$$

$$\frac{-\frac{1}{n}\Sigma_i x_i}{\sqrt{\frac{1}{n}\Sigma_i x_i^2 - \frac{1}{n^2}(\Sigma_i x_i)^2}} > \frac{\gamma}{\sqrt{n-1}}$$

$$\frac{\frac{1}{n}(\Sigma_i x_i)^2}{\Sigma_i x_i^2 - \frac{1}{n}(\Sigma_i x_i)^2} > \frac{\gamma^2}{n-1}$$

$$\left(\sum_i x_i\right)^2 > \gamma^2 \frac{n}{n-1}\left(\sum_i x_i^2 - \frac{1}{n}\left(\sum_i x_i\right)^2\right)$$

$$\left(\sum_i x_i\right)^2\left(1 + \frac{\gamma^2}{n-1}\right) > \gamma^2 \frac{n}{n-1}\sum_i x_i^2$$

If it is assumed that n = 16 and $\alpha \sim 0.0000001$, then $\gamma = 8.987$ (see table 2). This can be represented in pseudocode as below:

```
if(filled)
{
        if(get_8k_on_active_plane())
        { // 8k is up on active plane...
        if(get_8k_on_passive_plane())
                // ... And on passive one.
                if(sum<0)
                {
                        if(sum*sum>13*sum2)
                        {
```

```
                    switch_plane();
                    // Reset buffer.
                    sum=0; sum2=0;
                    filled=false; k=0;
                }
            }
        }
        else // No 8k on active plane...
        If (get_8k_on_passive_plane())
        { // ... But 8k up on passive one.
                    switch_plane();
                    // Reset buffer.
                    sum=0; sum2=0;
                    filled=false; k=0;
                }
        }
```

Table 2 : A few values of $1 + \dfrac{\gamma^2}{n-1}$ and $\gamma^2 \dfrac{n}{n-1}$ for a few values of the type I error (alpha values) assuming n = 16.

| A | $\gamma$ | $1 + \dfrac{\gamma^2}{n-1}$ | $\gamma^2 \dfrac{n}{n-1}$ | Ratio |
|---|---|---|---|---|
| 0.05 | 1.753 | 1.2049 | 3.2779 | 2.7205 |
| 0.01 | 2.602 | 1.4514 | 7.2218 | 4.9757 |
| 0.005 | 2.947 | 1.5790 | 9.2638 | 5.8669 |
| 0.0005 | 4.072 | 2.1054 | 17.6866 | 8.4006 |
| 0.0001 | 4.880 | 2.5876 | 25.4020 | 9.8168 |
| 0.0000 | 6.109 | 3.4880 | 39.8079 | 11.4128 |
| 0.000001 | 7.465 | 4.7151 | 59.441 | 12.6065 |
| 0.0000001 | 8.987 | 6.3844 | 86.1506 | 13.4939 |
| 0.00000001 | 10.680 | 7.6042 | 121.6666 | 15.9999 |

Note that the decision rule is adaptive in the sense that it needs no modification if some properties of its input changes. For example, if the number of active LAPD port changes or even if the maximum number of LAPD ports per TMU is increased from 62 to, say, 128 then no modification of the decision rule is required. It is only if the sampling rate is changed that an adjustment of the type I error probability might be necessary in case the false detection rate is not acceptable any more The type 1 error probability is directly related to the rate at which false detections occur. Experiments have been carried out with the above switching mechanism in a TMU and were successful, i.e. the switching between data paths was done correctly, even when only one LAPD channel is lost.

An implementation of the above techniques can be made using a circular buffer of size $2^m$. Each time the algorithm is called it updates the moving sum and the moving "sum of squares" which are used to make a switching decision provided that both 8k clocks are correct. This procedure will be shown below in pseudocode:

```
#define N 2^m
int sum=0,sum2=0;
bool filled=false;
int buffer[N],k=0;



        if(!filled)

        {

                buffer[k]=get_AAL1_counter_on_active_plane()

                -get_AAL1_counter_on_passive_plane();

                sum+=buffer[k];

                sum2+=buffer[k]*buffer[k];

                k++;

                if(k>=N)

                filled=true;

        }

        else

        {

                k&=(N-1);

                sum- =buffer[k];



                sum2- =buffer[k]*buffer[k];

                buffer[k]=get_AAL1_counter_on_active_plane()

                        -get_AAL1_counter_on_passive_plane();

                sum+=buffer[k];

                sum2+=buffer[k]*buffer[k];

                k++;

        }
```

The present invention may be implemented in hardware or, for example, in software using a processing engine such as a microprocessor or a programmable logic device (PLD's) such as a PLA (programmable logic array), PAL (programmable array logic), FPGA (field programmable gate array).

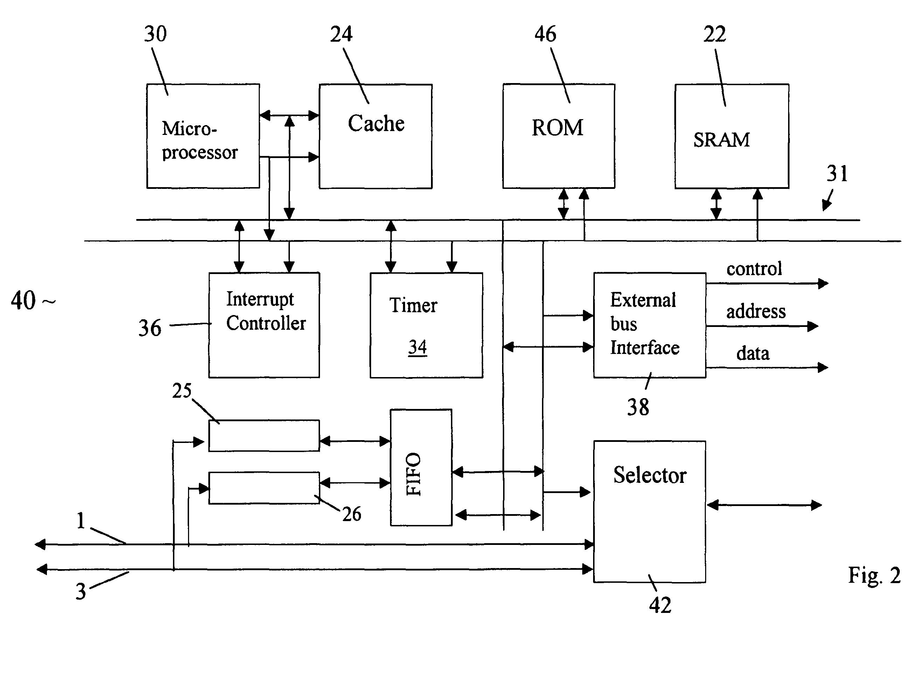

An example of such a circuit 40 will be described with reference to Fig. 2, e.g; for use in a TMU. This circuit 40 may be constructed as a VLSI chip around an embedded microprocessor 30 such as an ARM7TDMI core designed by ARM Ltd., UK which may be synthesized onto a single chip with the other components shown. A zero wait state SRAM memory 22 may be provided on-chip as well as a cache memory 24. I/O (input/output) interfaces 25, 26 are provided, e.g. bus interfaces, to sample the data streams 1, 3. FIFO buffers 32 may be used to decouple the processor 30 from data transfer through these interfaces. A counter/timer block 34 may be provided as well as an interrupt controller 36. The selector unit for selecting one of the data streams is provided by block 42. Software programs may be stored in an internal ROM (read only memory) 46. Access to an external memory may be provided an external bus interface 38 with address, data and control busses. The various blocks of circuit 40 are linked by suitable busses 31.

The means for carrying out a hypothesis testing algorithm and for sending instructions to the selector unit 42 as well as the control of a circular buffer according to the present invention may be implemented as software to run on processor 30. The circular buffer may be implemented in SRAM memory 22 under the control of processor 30. The procedures described above may be written as computer programs in a suitable computer language such as C and then compiled for the specific processor in the embedded design. For example, for the embedded ARM core VLSI described above the software may be written in C and then compiled using the ARM C compiler and the ARM assembler.

The present invention includes a software product such as a computer program for carrying out any of the methods of the present invention. In particular code of the computer product is provided, which when executed on a processing engine makes a decision and may output a result of the decision to select one of a plurality of nominally identical data streams carried on separate data paths. The software when executed on a processing engine may monitor a characteristic of the data streams which varies randomly or pseudorandomly with time. The selecting of one of the data streams may based on an estimated probability of an error in a decision to select the data streams in accordance with a hypothesis testing algorithm. The characteristic of the data streams which varies randomly or pseudorandomly with time may be the number of data cells carried by a data path in a unit time. The software may include code which, executed on a processing engine calculates a variance value of the characteristic and/or an average value of the characteristic. The software may include code which, executed on a processing engine, makes no change in the data path if the ratio of the average value to the variance values lies below a statistical value.

While the invention has been shown and described with reference to preferred embodiments, it will be understood by those skilled in the art that various changes or modifications in form and detail may be made. For example, in the above embodiments , a selection decision was made between two nominally identical data streams. Theses embodiments may be extended to selecting a data stream from a plurality of data streams by means of statistical theory developed for comparing more than two groups of observations, see for example Chapter 10 of "Statistical methods for the analysis of Biomedical data" R. F. Woolson and W. R. Clarke, second edition, Wiley, 2002.

**Claims**

1. A method of selecting one of a plurality of nominally identical data streams (1, 3) carried on separate data paths (6, 8), the method comprising:

   monitoring (10) a characteristic of the data streams (1, 3) which varies randomly or pseudorandomly with time;
   **characterized by**
   selecting (5) one of the data streams (1, 3) based on an estimated probability of an error in a decision to select one of the data streams in accordance with a hypothesis testing algorithm.

2. The method according to claim 1, wherein the data streams are at constant bit rate.

3. The method according to claim 1 or 2, wherein the characteristic of the data streams (1, 3) which varies randomly or pseudorandomly with time is the number of data cells carried by a data path in a unit time.

4. The method according to any previous claim, wherein the data streams are generated by packing data from a wireless network into an adaption layer of a network transmission protocol.

5. The method according to claim 4, wherein the network transmission protocol is ATM.

6. The method according to claim 4 or 5, wherein the data from a wireless network is an SS7 or LAPD data stream.

7. The method according to any previous claim wherein monitoring a characteristic of the data streams which varies randomly or pseudorandomly with time includes calculating a variance value of the characteristic.

8. The method according to claim 7, further comprising calculating an average value of the characteristic.

9. The method according to claim 7, wherein if the ratio of the average value to the variance values lies below a statistical value no change is made in the data stream.

10. A network element having means for selecting one of a plurality of nominally identical data streams (1, 3) carried on separate data paths (6, 8), the network element comprising:

   means for monitoring (10) a characteristic of the data streams (1, 3) which varies randomly or pseudorandomly with time; **characterized by**
   means for selecting (5) one of the data streams (1, 3) based on an estimated probability of an error in a decision to select one of the data streams in accordance with a hypothesis testing algorithm.

11. The network element according to claim 10, wherein the characteristic of the data streams (1, 3) which varies randomly or pseudorandomly with time is the number of data cells carried by a data path in a unit time.

12. The network element according to claim 10 or 11, further comprising packing means for packing data from a wireless network into an adaption layer of a network transmission protocol to generate the data streams.

13. The network element according to any of claims 10 to 12, wherein the means for monitoring has means calculating a variance value of the characteristic.

14. The network element according to claim 13, wherein the means for monitoring has means calculating an average value of the characteristic.

15. The network element according to claim 14, wherein the means for selecting does not select a new data stream if the ratio of the average value to the variance value lies below a statistical value.

16. A software product comprising code for executing any of the methods of claim 1 to 9 when the software product is executed on a processing engine.

17. A machine readable data carrier storing the software product of claim 16.

**Patentansprüche**

1. Verfahren zum Auswählen eines einer Vielzahl von nominell identischen Datenströmen (1,3), welche auf getrennten Datenwegen (6,8) geführt werden, wobei das Verfahren folgende Schritte aufweist:

   Überwachen (10) eines Charakteristikums der Datenströme (1,3) welches zufallsmäßig oder pseudo-zufallsmäßig mit der Zeit variiert;
   **gekennzeichnet durch**
   Auswählen (5) eines der Datenströme (1,3) basierend auf einer geschätzten Wahrscheinlichkeit eines Fehlers in einer Entscheidung zum Auswählen eines der Datenströme in Übereinstimmung mit einem Hypothese-Testalgorithmus.

2. Verfahren nach Anspruch 1 wobei die Datenströme bei einer konstanten Bit-Rate liegen.

3. Verfahren nach Anspruch 1 oder 2, wobei das Charakteristikum der Datenströme (1,3), welches zufallsmäßig oder pseudo-zufallsmäßig mit der Zeit variiert, die Anzahl von Datenzellen ist, welche durch einen Datenweg in einer Einheitszeit geführt werden.

4. Verfahren nach einem der vorhergehenden Ansprüche, wobei die Datenströme durch Packen von Daten von einem drahtlosen Netzwerk in eine Adaptierungsschicht eines Netzwerkübertragungsprotokolls erzeugt werden.

5. Verfahren nach Anspruch 4, wobei das Netzwerkübertragungsprotokoll ATM ist.

6. Verfahren nach Anspruch 4 oder 5, wobei die Daten von einem drahtlosen Netzwerk ein SS7- oder LAPD-Datenstrom sind.

7. Verfahren nach einem der vorhergehenden Ansprüche, wobei das Überwachen eines Charakteristikums der Datenströme, welche zufallsmäßig oder pseudo-zufallsmäßig mit der Zeit variieren, das Berechnen eines Variantswerts des Charakteristikums beinhaltet.

8. Verfahren nach Anspruch 7, welches weiterhin das Berechnen eines Mittelwerts des Charakteristikums aufweist.

9. Verfahren nach Anspruch 7, wobei, falls das Verhältnis des Mittelwerts zu dem Variantswert unterhalb eines statistischen Werts liegt, keine Änderung in dem Datenstrom vorgenommen wird.

10. Netzwerkelement mit einer Einrichtung zum Auswählen eines einer Mehrzahl von nominell identischen Datenströmen (1,3), welche auf separaten Datenwegen (6,8) geführt sind, wobei das Netzwerkelement aufweist:

   eine Einrichtung zum Überwachen (10) eines Charakteristikums der Datenströme (1,3), welches zufallsmäßig oder pseudo-zufallsmäßig mit der Zeit variiert;
   **gekennzeichnet durch**
   eine Einrichtung zum Auswählen (5) eines der Datenströme (1,3) basierend auf einem geschätzten Wahrscheinlichkeit eines Fehlers in einer Entscheidung zum Auswählen eines der Datenströme in Übereinstimmung mit einem Hypothese-Testalgorithmus.

11. Netzwerkelement nach Anspruch 10, wobei das Charakteristikum der Datenströme (1,3), welches zufallsmäßig oder pseudo-zufallsmäßig mit der Zeit variiert, die Anzahl von Datenzellen ist, welche von einem Datenweg in einer Einheitszeit geführt werden.

12. Netzwerkelement nach Anspruch 10 oder 11, welches weiterhin eine Packeinrichtung zum Packen von Daten von einem drahtlosen Netzwerk in einer Adaptierungsschicht eines Netzwerkübertragungsprotokolls zum Erzeugen der Datenströme aufweist.

13. Netzwerkelement nach einem der Ansprüche 10 - 12, wobei die Einrichtung zum Überwachen eine Einrichtung zum Berechnen eines Variantswerts des Charakteristikums aufweist.

14. Netzwerkelement nach Anspruch 13, wobei die Einrichtung zum Überwachen eine Einrichtung zum Berechnen eine Mittelwerts des Charakteristikums aufweist.

15. Netzwerkelement nach Anspruch 14, wobei die Einrichtung zum Auswählen keinen neuen Datenstrom auswählt falls das Verhältnis des Mittelwerts zum Variantswert unterhalb eines statistischen Werts liegt.

16. Software-Produkt mit einem Code zum Ausführen eines der Verfahren von Anspruch 1 - 9, wenn das Software-Produkt auf einer Prozessormaschine ausgeführt wird.

17. Maschinenlesbarer Datenträger zum Speichern des Software-Produkts nach Anspruch 16.

**Revendications**

1. Procédé de sélection d'un flux parmi une pluralité de flux de données (1, 3) nominalement identiques et acheminés sur des trajets de données (6, 8) séparés, le procédé comprenant :

   la surveillance (10) d'une caractéristique des flux de données (1, 3), qui varie de manière aléatoire ou pseudo-aléatoire dans le temps ;
   **caractérisé par**
   la sélection (5) d'un des flux de données (1, 3) sur la base d'une probabilité estimée d'une erreur dans une décision de sélection de l'un des flux de données selon un algorithme d'essai d'hypothèses.

2. Procédé selon la revendication 1, dans lequel les flux de données ont un débit binaire constant.

3. Procédé selon la revendication 1 ou 2, dans lequel la caractéristique des flux de données (1, 3), qui varie de manière aléatoire ou pseudo-aléatoire dans le temps, est le nombre de cellules de données acheminé par un trajet de données en une unité de temps.

4. Procédé selon l'une quelconque des revendications précédentes, dans lequel les flux de données sont produits par une mise en paquets de données provenant d'un réseau sans fil, en une couche d'adaptation d'un protocole de transmission du réseau.

5. Procédé selon la revendication 4, dans lequel le protocole de transmission du réseau est l'ATM.

6. Procédé selon la revendication 4 ou 5, dans lequel les données provenant d'un réseau sans fil sont un flux de données SS7 OU LAPD.

7. Procédé selon l'une quelconque des revendications précédentes, dans lequel la surveillance d'une caractéristique des flux de données, qui varie de manière aléatoire ou pseudo-aléatoire dans le temps, comprend le calcul d'une valeur de variance de la caractéristique.

8. Procédé selon la revendication 7, comprenant en outre le calcul d'une valeur moyenne de la caractéristique.

9. Procédé selon la revendication 7, dans lequel, si le rapport de la valeur moyenne aux valeurs de variance est situé au-dessous d'une valeur statistique, aucune modification n'est apportée au flux de données.

10. Elément de réseau comportant des moyens pour sélectionner un flux parmi une pluralité de flux de données (1, 3) nominalement identiques et acheminés sur des trajets de données (6, 8) séparés, l'élément de réseau comprenant :

   des moyens pour la surveillance (10) d'une caractéristique des flux de données (1, 3), qui varie de manière aléatoire ou pseudo-aléatoire dans le temps ;
   **caractérisé par**
   des moyens pour la sélection (5) d'un des flux de données (1, 3) sur la base d'une probabilité estimée d'une erreur dans une décision de sélection de l'un des flux de données selon un algorithme d'essai d'hypothèses.

11. Elément de réseau selon la revendication 10, dans lequel la caractéristique des flux de données (1, 3), qui varie de manière aléatoire ou pseudo-aléatoire dans le temps, est le nombre de cellules de données acheminé par un trajet de données en une unité de temps.

12. Elément de réseau selon la revendication 10 ou 11, comprenant en outre des moyens de mise en paquets pour mettre en paquets des données provenant d'un réseau sans fil, en une couche d'adaptation d'un protocole de transmission du réseau, pour produire les flux de données.

13. Elément de réseau selon l'une des revendications 10 à 12, dans lequel les moyens de surveillance comportent des moyens de calcul d'une valeur de variance de la caractéristique.

14. Elément de réseau selon la revendication 13, dans lequel les moyens de surveillance comportent des moyens de calcul d'une valeur moyenne de la caractéristique.

15. Procédé selon la revendication 14, dans lequel les moyens de sélection ne sélectionnent pas un nouveau flux de données, si le rapport de la valeur moyenne à la valeur de variance est situé au-dessous d'une valeur statistique.

16. Produit logiciel comprenant un code pour l'exécution de l'un quelconque des procédés selon les revendications 1 à 9, lorsque le produit logiciel est exécuté dans une machine de traitement.

17. Support d'informations lisible par machine, conservant le produit logiciel selon la revendication 16.

EP 1 587 257 B1

Fig. 1

SRAM 22

ROM 46

Cache 24

Micro-processor 30

31

External bus Interface 38

control

address

data

Selector 42

Timer 34

FIFO

Interrupt Controller 36

25

26

40 ~

1

3

Fig. 2

PROVIDE
DUPLICATE
STREAMS

MONITOR
RANDOMLY
VARYING
CHARACTERISTIC
OF STREAMS

DETERMINE NULL AND
ALTERNATIVE
HYPOTHESIS

SELECT LEVEL OF TYPE 1
ERROR

CHOOSE TEST STATISTIC
WHOSE NUMERICAL
VALUE LEADS TO
ACCEPTANCE OR
REJECTION

DETERMINE VALUE OF
TEST STATISTIC WHICH
LEADS TO REJECTION OF
NULL HYPOTHESIS

USING
RECEIVED DATA, IS
CALCULATED VALUE
TOO EXTREME?

NO CHANGE

NO

YES

CHANGE DATA STREAM

Fig. 3

PROVIDE
DUPLICATE
STREAMS

MONITOR
CHARACTERISTIC
OF STREAMS

COMPUTE

$$\bar{d} = \frac{1}{n}\Sigma_i d_i$$

COMPUTE

$$S_d = \sqrt{\frac{1}{n}\Sigma_i\left(d_i - \bar{d}\right)^2}$$

IS $\dfrac{d}{s_d} \geq -\dfrac{\gamma}{\sqrt{n-1}}$ ?

NO

YES

CHANGE DATA STREAM

Fig. 4